# EUROPEAN PATENT APPLICATION

(11) **EP 2 345 996 A1**
(43) Date of publication of application: **20.07.2011**
(21) Application number: 09014870.1
(22) Date of filing: 01.12.2009
(51) Int. Cl.: G06T 7/00

(54) **Method and computing device for generating a 3D body**

(71) Applicant: ETH Zürich, ETH Transfer, 8092 Zürich (CH); Indian Institute Of Technology, Delhi, New Delhi 110 016 (IN)
(72) Inventor: Mitra, Niloy, 700019 Kolkata (IN); Pauly, Mark, 8006 Zürich (CH)
(74) Representative: Rentsch Partner AG

(57) **Abstract**

For generating a 3D body which is configured to cast in different directions shadows representing different images, at least two binary images are provided (ST1) in a computer. For each of the binary images, determined (ST2) in the computer is a shadow projection directed from a different source in a different one of the directions. A 3D shadow hull (H) is determined (ST3) by the computer by intersecting the shadow projections associated with each of the binary images. Based on the 3D shadow hull, geometric data defining the 3D body is generated (ST6) by the computer. Defining the 3D body based on intersecting shadow projections makes it possible for a user to generate efficiently a customized 3D body by simply selecting two or more binary images that define the desired shadow and specifying the spatial arrangement of light sources.

## Description

### Field of the Invention

The present invention relates to a method and a computing device for generating a three-dimensional (3D) body. Specifically, the present invention relates to a computer-implemented method and a computing device for generating a 3D body which is configured to cast in different directions shadows representing different images.

### Background of the Invention

Shadows play an essential role in how we perceive the world and have for a long time captured the imagination of artists and stage performers. The human ability to recognize 3D objects from their 2D shadows and the fact that many different shapes can cast the same shadow are instrumental in the classical hand shadows and other forms of storytelling such as ancient Chinese shadow puppetry as explained by EWART, F. G. 1998, "Let The Shadows Speak", Trentham Books.

More recently, artists like Tim Noble and Sue Webster, or Shigeo Fukuda have created shadow art sculptures by assembling everyday objects into a seemingly random 3D ensemble. What makes these sculptures so compelling is that even though the 3D collage does not resemble any recognizable object, shadows cast by the sculptures create the illusion of a clearly recognizable scene. In a variation, a 3D volume has been created that exhibits two or three distinct silhouettes when viewed from orthogonal view points. Numerous other artists have applied similar ideas in their work, typically using a manual, trial-and-error style approach to assemble 3D shadow sculptures. The trial-and-error approach is extremely tedious and time consuming and typically limited to one, two or at most three orthogonal shadows.

Shadows and visibility are central to many computer graphics applications and have been studied extensively both from a mathematical and perceptual point of view.

The effect of shadow quality on the perception of spatial relationships in computer generated imagery has been studied in WANGER, L. C., FERWERDA, J. A., AND GREENBERG, D. P., 1992, "Perceiving spatial relationships in computer-generated images", IEEE Comput. Graph. Appl. 12, 3, 44-51, 54-58" and WANGER, L. 1992, "The effect of shadow quality on the perception of spatial relationships in computer generated imagery", in Proc. of the Symp. on Interactive 3D graphics, 39-42.

An interface for interactive cinematic shadow design has been presented in PELLACINI, F., TOLE, P., AND GREENBERG, D. P., 2002, "A user interface for interactive cinematic shadow design", ACM SIGGRAPH Trans. Graph. 21, 3, 563-566, where the user modifies indirectly the positions of light sources and shadow blockers by specifying constraints on the desired shadows.

A formal framework for studying visibility, properties in a plane was presented in POCCHIOLA, M., AND VEGTER, G, 1993, "The visibility complex", in Proc. of the ACM Symposium on Computational Geometry, 328-337.

The coherence and global nature of visibility for scenes composed of smooth convex objects was analyzed in DURAND, F., DRETTAKIS, G., AND PUECH, C, 2002, "The 3D visibility complex", ACM Trans. Graph. 21, 2, 176-206. Even in this simplified setting, the resulting data structure has a complexity of Order(n⁴) for n objects, indicating that a naive global optimization of the visibility complex for a shadow art application is impractical.

### Summary of the Invention

It is an object of this invention to provide a computer-implemented method and a computing device for generating a 3D body which is configured to cast in different directions shadows representing different images. In particular, it is an object of the present invention to provide a computer-implemented method and a computing device for generating without the laborious trial-and-error effort of the prior art a 3D body which is configured to cast in different directions shadows representing different images. In particular, it is a further object of the present invention to provide a computer-implemented method and a computing device for generating a 3D body which is configured to cast in different non-orthogonal directions shadows representing different images.

According to the present invention, these objects are achieved particularly through the features of the independent claims. In addition, further advantageous embodiments follow from the dependent claims and the description.

According to the present invention, the above-mentioned objects are particularly achieved in that for generating a 3D body which is configured to cast in different directions shadows representing different images, at least two binary images are provided in a computer. For each of the binary images, determined in the computer is a shadow projection directed from a different source in a different direction. The computer determines a 3D shadow hull by intersecting the shadow projections associated with each of the binary images and, based on the 3D shadow hull, the computer generates geometric data defining the 3D body. Defining the 3D body based on intersecting shadow projections makes it possible for a user to generate efficiently a customized 3D body by simply selecting two or more binary images that define the desired shadows, and specifying the spatial arrangement of the light sources (view points).

For example, the shadow projections are determined in the computer by defining an orthographic projection or a perspective projection. Accordingly, the 3D shadow hull is determined by intersecting shadow cylinders or shadow cones, respectively.

In an embodiment, more than two binary images are provided in the computer. For reducing inconsistencies between the binary images and their respective shadows, cast by the 3D body in each case for the source and direction associated with the respective binary image, the computer applies smooth transformations to the binary images. Owing to the problem that multiple shadows often contradict each other, i.e. no 3D shape exists that simultaneously satisfies all shadow constraints, this geometric optimization method makes it possible to determine automatically a consistent shadow hull by deforming the input images. The smooth deformation of the input images makes it possible to satisfy the shadow constraints while minimizing the distortion induced by the deformation.

In a further embodiment, reducing inconsistencies includes determining, for a missing pixel in an inconsistent shadow of one of the binary images, a set of additional voxels for the 3D body that would each cause a shadow pixel to be projected at the location of the missing pixel, and selecting from the set of additional voxels one that causes the least inconsistencies in the shadows of the other ones of the binary images.

In another embodiment, the computer displays visual indications of inconsistencies in the shadows, e.g. missing pixels, cast by the 3D body in each case for the source and direction associated with one of the binary images. Responsive to user instructions, the computer applies affine transformations to at least one of the binary images and shows to the user the effect of the affine transformations by determining an altered 3D shadow hull, based on shadow projections of the binary images after their affine transformation, and displaying the visual indications of inconsistencies in the shadows cast by an altered 3D body based on the altered 3D shadow hull.

In a further embodiment, the computer displays a graphical representation of the 3D body and, responsive to a user selection of one or more voxels in the graphical representation of the 3D body, the computer keeps the selected voxels in the 3D body, if a removal of the respective voxels from the 3D body would cause a removal of a corresponding shadow pixel in one of the shadows of the binary images, and removes the respective voxels in the 3D body, otherwise. Thus, the initially computed (conservative) shadow hull is taken as a sculpting block for further editing in order to create more interesting 3D sculptures, while ensuring automatically that any editing is consistent with the computed shadow images. This takes away from the user the burden of manually controlling the often intricate shadow constraints arising from multiple shadow images within the same 3D sculpture. A set of interactive 3D editing tools supports the exploration of the space of all possible sculptures that are consistent with a set of desired shadow images and, in a variant, further allows the creation of constructive shadow art using an automated space-filling method.

Depending on the application, the 3D body is manufactured based on the geometric data by laser etching a transparent cube, generating a mold for injection molding, shaping a block of material, and/or assembling material components, e.g. layers, slices or individual (Lego) blocks.

In addition to the computer-implemented method and computing device for generating a 3D body which is configured to cast in different directions shadows representing different images, the present invention also relates to a computer program product comprising computer program code which is configured to control a computing device such that the computing device executes the method of generating a 3D body, which is configured to cast in different directions shadows representing different images. Particularly, the computer program product comprises a tangible computer-readable medium having stored thereon the computer program code.

### Brief Description of the Drawings

The present invention will be explained in more detail, by way of example, with reference to the drawings in which:
Figure 1 shows a block diagram illustrating schematically a computing device for generating a 3D body which is configured to cast in different directions shadows representing different images.
Figure 2 shows a flow diagram illustrating an exemplary sequence of steps for generating a 3D body which is configured to cast in different directions shadows representing different images.
Figure 3 shows an example of shadow projections of three binary images, and a shadow hull resulting from the intersection of the shadow cones defined by the shadow projections.
Figure 4 shows an exemplary sequence of optimization steps for reducing inconsistency between the binary images and the shadows cast by the shadow hull.
Figure 5 illustrates an example of how to select a pixel from a voxel for minimizing inconsistencies between the binary images and the shadows cast by the shadow hull.

### Detailed Description of the Preferred Embodiments

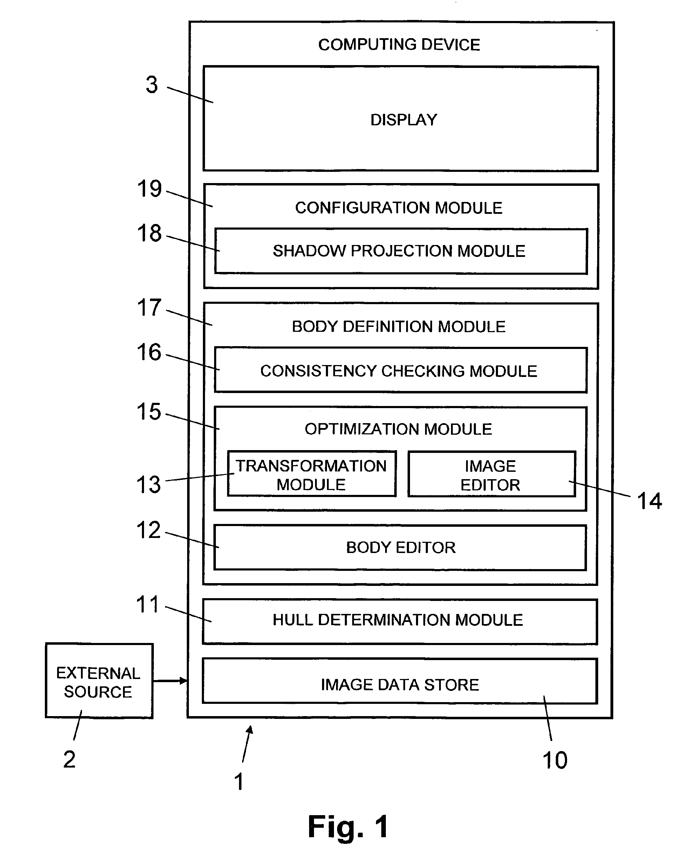

In Figure 1, reference numeral 1 refers to a computing device (or computer) for generating a 3D body which is configured to cast in different directions shadows representing different images. The computing device 1 comprises at least one operable computer with one or more processors, e.g. including a graphical processing unit (GPU), and data and program memory. For example, the computing device 1 is implemented as a personal computer.

As illustrated schematically in Figure 1, the computing device 1 comprises several functional modules including a hull determination module 11, a body editor 12, a transformation module 13, an image editor 14, an optimization module 15, a consistency checking module 16, a body definition module 17, a shadow protection module 18, and a configuration module 19. Preferably, these functional modules are implemented as programmed software modules comprising computer program code configured to control a processor of the computing device 1 such that the computing device 1 executes functions as described later. One skilled in the art will understand, however, that in alternative embodiments the functional modules may be implemented fully or partly with hardware components.

The computing device 1 further comprises an image data store 10 and a display 3. The display 3 is integrated in a common housing with the computer or in a separate housing.

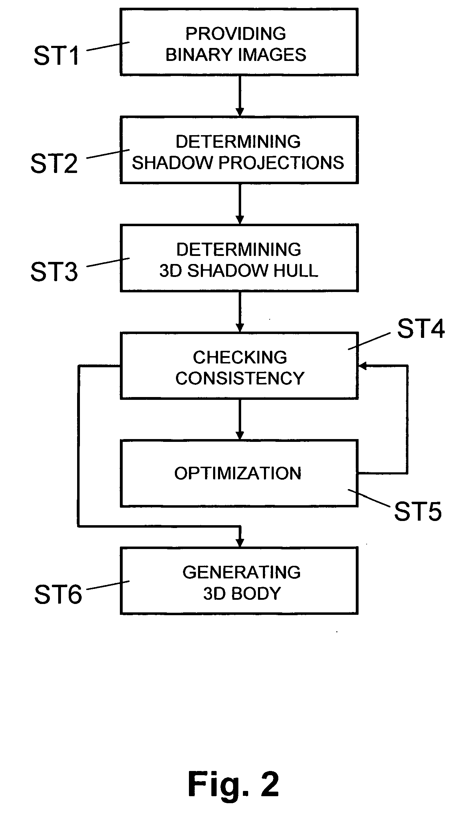

In the following paragraphs, described with reference to Figure 2, are possible sequences of steps performed by the functional modules for generating a 3D body which is configured to cast in different directions shadows representing different images.

In step ST1, several different binary images, at least two, preferably more than two, are provided in the computing device 1. Specifically, the binary images are stored in image data store 10. For example, the binary images are retrieved and received from an external source 2 via a communication link, e.g. a computerized server or database arranged externally to the computing device 1. The binary input images Iₖ are represented as binary pixel (picture element) grids (i.e. arrays) with Iₖ(i, j)=1 for a shadow (dark) pixel, and Iₖ(i, j)=0 for a lit (bright) pixel.

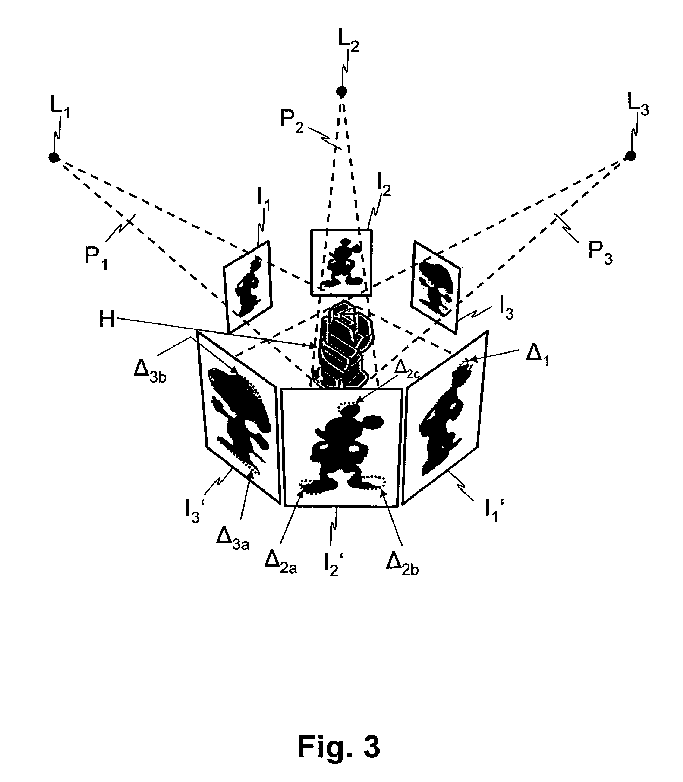

In step ST2, shadow projections are determined in the computing device 1 for each of the binary images. As illustrated in Figure 3, the configuration module 19 defines for each of the binary images I₁, I₂, I₃ a different shadow projection P₁, P₂, P₃ which are in each case directed from a different source L₁, L₂, L₃ in a different direction. For example, the shadow projection module 18 provides to a user a graphical user interface for defining the shadow projections P₁, P₂, P₃, specifically a source L₁, L₂, L₃ and a direction, associated in each case with a selected binary image I₁, I₂, I₃. In the example of Figure 3, perspective projection P₁, P₂, P₃ is depicted, i.e. the sources L₁, L₂, L₃ are representative of point light sources which cast the shadows I₁', I₂', I₃'. In an alternative embodiment or mode, orthographic projections are used, i.e. the shadows I₁', I₂', I₃' are cast by directional light sources. In an embodiment, the shadow projection module 18 enables the user to select perspective or orthographic projection.

Thus, in steps ST1 and ST2, the input to the system is defined by a set S={S₁,...,Sₙ} of shadow sources Sₖ=(Iₖ, Pₖ). The binary image Iₖ represents the desired shadow, while the projection Pₖ defines the spatial configuration of the shadow source. Each shadow source Sₖ defines a generalized shadow cone Cₖ ⊂ IR³ (or shadow cylinder, respectively) that marks the maximum region of space compatible with Iₖ and Pₖ.

In step ST3, the hull determination module 11 determines a 3D shadow hull H by intersecting the shadow cones. Specifically, intersecting the shadow cones of the set S yields the 3D shadow hull H(S) = C₁ ∩ ... ∩ Cₙ. Analogously to representing the binary input images Iₖ, the shadow hull H is represented with a binary voxel (volume element) grid (i.e. array), where H(x, y, z)=1 denotes occupied voxels of the shadow hull H, while H(x, y, z)=0 indicates empty space. Pixels and voxels with Iₖ(i, j)=1 or H(x, y, z)=1, respectively, are called active, otherwise, they are considered empty.

For computing the shadow hull H, all voxel centers are mapped onto each of the different input images Iₖ using the projection Pₖ. The value of a specific cell (voxel) is then evaluated using a binary AND operation on the corresponding image pixels. Thus, for a voxel H(x, y, z) to be defined active, it is required that a projection ray of each of the projections P₁, P₂, P₃ of the binary images L₁, L₂, L₃ must run from the respective source L₁, L₂, L₃ through the voxel H(x, y, z). In other words, each of binary images I₁, I₂, I₃ must have a projection P₁, P₂, P₃ through the respective voxel H(x, y, z); otherwise, the voxel H(x, y, z) remains empty to avoid an incorrect shadow pixel in one of the shadows I₁', I₂', I₃'.

The volumetric approach is preferred over a surface-based method, since subsequent editing of the shadow hull H requires volumetric operations that can be defined in a straightforward way on a voxel grid. In addition, the regularity of the grid enables an efficient GPU implementation similar to the visual hull computation described in LADIKOS, A., BENHIMANE, S., AND NAVAB, N. 2008, "Efficient visual hull computation for real-time 3D reconstruction using CUDA", in Proc. of CVPR Workshops.

The shadow hull H defines geometrically a 3D body and can be seen as a sculpting block for a 3D shadow art piece, for example. Any part of space outside the 3D shadow hull H cannot be part of the 3D body (sculpture), since this would contradict at least one of the desired shadow images. However, typically a considerable amount of material of the 3D shadow hull H can be removed without violating the shadow constraints to create artistically pleasing results.

In the remaining steps ST4, ST5 and ST6, the body definition module 17 generates, based on the 3D shadow hull H, geometric data which defines a refined 3D body for casting in different directions shadows I₁', I₂', I₃' which have only little inconsistencies with the binary input images I₁, I₂, I₃

In step ST4, the consistency checking module 16 determines the shadows I₁', I₂', I₃' cast by the 3D body, as defined by the 3D shadow hull H, for the projections defined in step ST2, specifically for the sources L₁, L₂, L₃ and directions associated with the shadow projections P₁, P₂, P₃ of step ST2. Subsequently, the consistency checking module 16 determines the consistency or inconsistencies, respectively, between the shadow sources, as defined by the binary (input) images I₁, I₂, I₃ and the respective shadows I₁', I₂', I₃' cast by the 3D body defined by the shadow hull H. If Iₖ' is the actual shadow cast by the shadow hull H under projection Pₖ, a set of shadow sources is considered consistent, if Iₖ'= Iₖ for all k.

As indicated in Figure 3 by inconsistencies Δ₁, Δ₂ₐ, Δ_{2b}, Δ_{2c}, Δ₃ₐ, Δ_{3b} the shadows I₁', I₂', I₃' need not be consistent with the shadow sources provided by the user. In fact, inconsistency is the rule rather than the exception for more than two shadow sources. Inconsistent shadow sources lead to a shadow hull H that casts incomplete shadows I₁', I₂', I₃' i.e. parts of the binary (input shadow) image I₁, I₂, I₃ will be missing in the corresponding shadow I₁', I₂', I₃' which can easily destroy the desired artistic effect. If no inconsistencies are found, processing continues in step ST6, otherwise, in step ST5.

In step ST5, the optimization module 15 is used to reduce inconsistencies between the binary (input shadow) images I₁, I₂, I₃ and their corresponding shadows I₁', I₂', I₃' Depending on the embodiment and/or selected mode of processing, these inconsistencies are reduced by the transformation module 13 and/or the image editor 14.

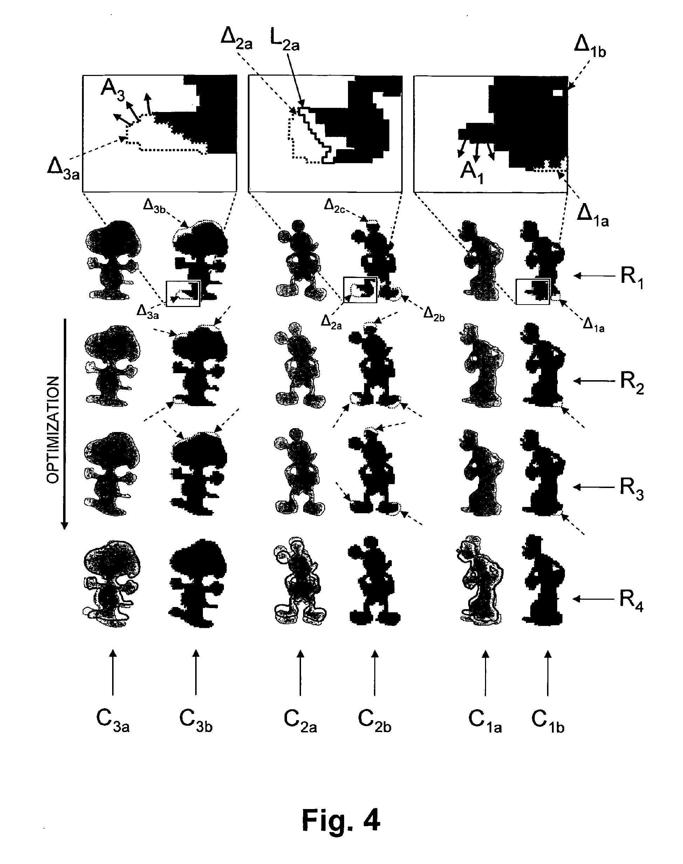

Extensive experiments carried out by the inventor have confirmed that the existence of a consistent set of shadow sources is the exception for more than two shadow images. To overcome this limitation, the optimization approach aims at finding a consistent set of images which are as close as possible to the provided binary input images I₁, I₂, I_{3.} The optimization exploits the fact that even small changes in one input image can lead to drastic improvements in terms of shadow consistency of the other input images. As illustrated in Figure 4, subtle deformations of the binary input images I₁, I₂, I₃ can yield a consistent shadow hull without significantly altering the desired shadows I₁', I₂', I₃'

The image editor 14 displays the binary images I₁, I₂, I₃ and/or the respective shadows I₁', I₂', I₃', in each case with visual indications of inconsistencies Asia, Δ_{1b}, Δ₂ₐ, Δ_{2b}, Δ_{2c} Δ₃ₐ, Δ_{3b}, e.g. missing pixels, in their respective shadows I₁', I₂', I₃', as shown in Figure 4 in row R₁ of columns C_{1b}, C_{2b}, C_{3b}, for example. Subsequently, the image editor 14 receives from the user instructions which define affine transformations to be applied to the binary images I₁, I₂, I₃ e.g. through a graphical user interface. For example, the affine transformations include translatory movement, scaling and rotation of a binary image I₁, I₂, I_{3.}

Responsive to the user instructions, the image editor 14 applies the specified affine transformations to the respective binary images I₁, I₂, I₃, e.g. with a corresponding visual feedback on the display 3, as illustrated in Figure 4 in rows R₂ and R₃ of columns C₁ₐ, C₂ₐ, C₃ₐ. Moreover, the image editor 14 uses the hull determination module 11 to determine an altered 3D shadow hull based on shadow projections of the binary images after their affine transformation. The altered 3D shadow hull is determined by intersecting the shadow cones which are defined by the altered set S'={S'₁,...,S'ₙ) of shadow sources S'ₖ=(I'ₖ, Pₖ), based on the (affine) transformed binary images I'ₖ and the projections Pₖ.

Subsequently, the image editor 14 uses the consistency checking module 16 to determine the shadows cast by the 3D body defined by the altered 3D shadow hull, and to determine the consistency or inconsistency, respectively, between the binary (input) images I₁, I₂, I_{3,} and the respective shadows cast by the 3D body corresponding to the altered 3D shadow hull. The inconsistencies are shown to the user by the image editor 14 on the display 3. Thus, the image editor 14 makes it possible for the user to determine an altered 3D shadow hull which produces less inconsistency by iteratively amending the binary images through affine transformations. If the user determines that there is sufficient consistency, i.e. inconsistency is sufficiently reduced, further optimization is stopped and processing continues in step ST6.

Nevertheless, depending on the binary input images I₁, I₂, I₃ manually specifying the deformations can be extremely cumbersome, because altering one part of the model, e.g. one of the binary input images I₁, I₂, I₃, can easily invalidate other regions, due to the strong coupling of shadow constraints.

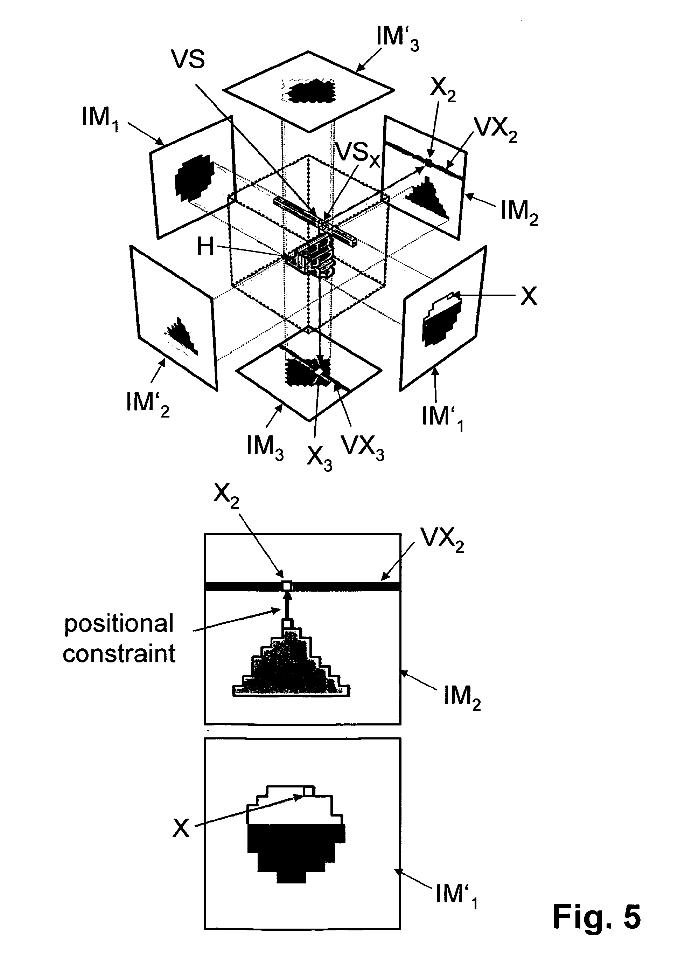

The transformation module 13 is configured to resolve the inconsistencies simultaneously in a global optimization approach. Specifically, the transformation module 13 is configured to reduce inconsistency between the binary images and their respective shadows by applying smooth transformations to the binary images. As shown in the example of Figure 5, the transformation module 13 determines, for a missing pixel X in an inconsistent shadow IM'₁, of one of the binary images IM₁, a set of additional voxels VS for the 3D shadow hull H (or the corresponding 3D body, respectively) that would each cause a shadow pixel to be projected at the location of the missing pixel X. From this set of additional voxels VS, the transformation module 13 selects a voxel VSₓ that causes the least inconsistencies in the shadows IM'₂, IM'₃ of the other ones of the binary images IM₂, IM₃.

For example, the transformation module 13 employs the as-rigid-as possible shape manipulation method of IGARASHI, T., MOSCOVICH, T., AND HUGHES, J. F. 2005, "As-rigid-as-possible shape manipulation", ACM SIGGRAPH Trans, Graph. 24, 3, which computes a smooth deformation of an image using a 2D triangle mesh discretization of the image space. The optimization solves for vertex displacement vectors that are linearly interpolated to compute new positions for each image pixel. Given a set of positional constraints to drive the deformation, these constraints are automatically derived by analyzing the shadow inconsistencies, i.e. the set of pixels that are active in the input images Iⱼ, but empty in the corresponding shadow images I'ⱼ.

Figure 5 provides a low-resolution illustration with three orthogonal input images IM₁, lM₂, lM₃. Due to inconsistencies, the resulting shadow images IM'₁, IM'₂, IM'₃ are incomplete. An inconsistent pixel X in IM'₁ corresponds to a set of voxels VS composed of a line of empty voxels in the shadow hull H. Setting from this set of voxels VS any voxel to active would fill the missing pixel X in IM'₁. However, these voxels project onto lines of pixels VX₂, VX₃ in lM₂ and lM₃ that lie completely outside the desired shadow silhouette in a least one of the images IM₂. Thus, for realizing a missing pixel X in IM'₁, it is necessary to contradict at least one of the shadows of the binary images lM₂ or lM₃. Preferably, a cost value is assigned to such a shadow violation by measuring the minimal distance of all pixels VX₂, VX₃ projected by the set of voxels VS to the boundary of the contradicted shadow source images lM₂ and IM₃; if both binary images lM₂ and lM₃ are violated, a sum of these distances is taken. The least-cost voxel VSₓ provides the position constraints for the deformation.

In the example of Figure 5, the projection of this least-cost voxel VSₓ in image IM₂ (pixel X₂) is selected as the target location for the corresponding closest point on the shadow boundary, i.e. the closest distance to active pixels of image IM₂. This will deform image lM₂ towards a configuration that is likely to resolve the inconsistency at the missing pixel X in IM'₁, without having any negative impact for image lM₃, because pixel X₃ is active as is.

Figure 4 shows examples of different iteration stages of the optimization for the configuration shown in Figure 3. Columns C₁ₐ, C₂ₐ, C₃ₐ show the binary images I₁, I₂, I₃ at different stages of iteration, starting in Row R1 with the original initial binary images I₁, I₂, I₃; progressing through iteration stages of the binary images at rows R2 and R3, and ending at the final iteration stage with the transformed images at row R4. Columns C_{1b}, C_{2b}, C_{3b} show the corresponding shadows I₁', I₂', I₃' as projected by the 3D shadow hull H defined by the binary images of the iteration stage in rows R1, R2, R3 or R4, respectively. In Figure 4, dashed arrows indicate inconsistencies Δ₁ₐ, Δ_{1b}, Δ₂ₐ, Δ_{2b}, Δ_{2c}, Δ₃ₐ, Δ_{3b} between the binary images I₁, I₂, I₃ and their respective shadows I₁', I₂', I₃' at the various stages of iteration in rows R1, R2, R3, R4.

In each iteration, a thin layer of inconsistent pixels is selected in each of the input images lⱼ, an example being indicated in Figure 4 by reference numeral L₂ₐ in the zoom of Mickey's foot. Using the optimization approach described above and illustrated in Figure 5, corresponding positional constraints are obtained, as indicated by arrows A₁, A₂ in Figure 4, for boundary pixels of the other input images; and the same procedure is applied simultaneously to all other images. Employing the as-rigid-as possible shape manipulation for satisfying the desired positional constraints, a continuous displacement field is obtained for each image. Since small changes to one image can have drastic effects on the consistency of the others, only a small fraction of the resulting displacements is applied to the images, e.g. 25%. The positional constraints are then re-computed from the updated images, and the process is repeated until a consistent configuration is achieved. Initially a high stiffness is used in the deformation model to automatically position the images relative to each other. Subsequently, stiffness is relaxed to allow non-rigid deformations. Further optimization is stopped when the image deformation cost with respect to the input images exceeds a user-specified tolerance, and processing continues in step ST6.

The result of the optimization yields a consistent shadow hull defining the maximal region of space that can possibly be occupied by the 3D sculpture. The shadow hull H itself might already be the desired sculpture so that the geometry of the 3D body is defined in step ST6 by the 3D shadow hull H. Nevertheless, for creating more interesting shadow art in step ST6, the body editor 12 provides a volumetric sculpting tool that allows a user to interactively edit the volume of the shadow hull H.

If the user decides to alter the 3D body defined by the shadow hull from step ST5, in step ST6, the body editor 12 displays for the user on display 3 a graphical representation of the 3D body. Subsequently, the body editor 12 receives from the user, e.g. via a graphical user interface, instructions for selecting a specific editing tool.

Editing by volumetric sculpting is based on the fact that, in general, only a subset of the shadow hull is required to achieve the desired shadow images, leaving substantial freedom to create artistically pleasing 3D sculptures by removing material from the hull. The shadow constraints impose a strong non-local coupling between different parts of the shadow volume that dynamically changes as the sculpture is edited. This leads to a unique interactive design process, where local edits in some region can affect the flexibility of edits in other parts of the model.

In essence, for volumetric sculpting, the body editor 12 receives from the user, e.g. via a graphical user interface, instructions for selecting and removing one or more voxels in the graphical representation of the 3D body. Contrary to the user instructions, the body editor 12 keeps in the 3D body those voxels that were selected for removal but would cause a missing shadow pixel in one of the shadows of the binary images. On the other hand, the body editor 12 deletes in the 3D body those voxels that were selected for removal and do not cause a missing shadow pixel in any one of the shadows of the binary images.

The body editor 12 includes a number of editing tools for supporting the creation of compelling shadow art, a brush tool, a ray tool, and an erosion tool. Similar to 2D painting applications, the brush tool allows the user to activate and de-activate shadow voxels using a variable-size 3D brush that selects all voxels within a spherical region around the focus point. In case the shadow constraints prohibit removing all selected voxels simultaneously, the user can choose between two options: either abort the removal operation altogether, or remove as many voxels of the brush selection as possible using a pre-defined traversal order. Since the penetration of light through the shadow sculpture is of particular importance for the resulting visual effect, the ray tool allows the user to select all voxels along a ray piercing the shadow hull. The selection is computed as the intersection of the shadow volume with a cylinder of varying radius. Voxels are only removed, if the entire set can be deleted, so that light can pass through the volume in the direction of the ray.

To simulate the effect of random erosion of the shape, the body editor 12 includes an animated graphical object, e.g. a snake, that eats its way through the currently active voxel set, i.e. it removes all voxels encountered in its traversal of the shadow volume, if compatible with the shadow constraints. The animated object, e.g. the snake, is controlled by the user, for example, by specifying its starting point, lifetime and/or directional preferences. The erosion-like appearance in the resulting shadow sculpture can create artistically interesting effects that would be tedious to achieve with direct editing.

Once editing is finalized, i.e. the user is satisfied with the edited shadow hull, the voxel grid is converted to a triangle mesh using contouring described in KAZHDAN, M., KLEIN, A., DALAL, K., AND HOPPE, H. 2007, "Unconstrained isosurface extraction on arbitrary octrees", In Proc. of Symp. of Geometry Processing, 125-133. A few steps of subdivision on the mesh yield a smooth surface that can, for example, be send to a 3D printer. Preferably, the geometric data (e.g. the voxel grid, triangle mesh or other geometric data representation) defining the edited 3D body is stored by the body editor 12 in a data store inserted removably or arranged in a fixed fashion in the computing device 1. In an embodiment, the body definition module 17 generates and stores control data for an NC (numerically controlled) machine to manufacture the defined 3D body, for example by laser etching a transparent cube, generating a mold for injection molding, shaping a block of material, and/or producing a set of material components, e.g. layers, slices or individual (Lego) blocks, for assembly of the 3D body.

The optimization approach does not consider structural aspects such as connectedness of the shadow hull that might be important for a physical realization of the sculpture. However, in an embodiment, the body editor 12 is configured to ensure that no component separation takes place and, thus, no additional components are created during the editing stage. If the input images depict objects that comprise multiple (spatially separated) components, the shadow hull will consequently consists of disconnected pieces. In such cases, the 3D sculpture can be embedded in a transparent medium, for example. Alternatively, transparent threads or other thin supporting elements can be added to create a stable configuration.

In an embodiment, the body definition module 17 is further configured for example-based design of the shadow sculptures inspired by the constructive approach that is popular with contemporary artists. Given a repository of 3D example shapes, the body definition module 17 applies an iterative space filling method to fully automatically assemble the 3D sculpture. Initially, the entire shadow volume is marked as empty. The body definition module 17 then selects a random shape from the repository and positions the shape randomly in an empty region of the shadow volume. This initial position is refined using a registration method that optimizes for a rigid transformation that brings the example shape into correspondence with the 3D shadow mesh described in RUSINKIEWICZ, S., AND LEVOY, M. 2001, "Efficient variants of the ICP algorithm", 3DIM, 145-152. In a variant, additional inside-outside tests are included to guarantee that the example shape remains within the shadow volume. This approach is similar to recent work on expressive 3D modeling outlined in GAL, R., SORKINE, O., POPA, T., SHEFFER, A., AND.COHENOR, D. 2007, "3D collage: Expressive non-realistic modeling", in Proc. of NPAR, 7-14. However, the body definition module 17 differs mainly in that it focuses primarily on 2D silhouette matching.

In the above description, the focus is on the creation of shadow art sculptures, yet other applications can also benefit from the described optimization approach. For example, in 3D reconstruction based on visual hulls the described approach could reduce inconsistencies caused by inaccurate camera calibration or lens distortions. The described approach can also be used in sketch-based modeling presented in OLSEN, L., SAMAVATI, F., SOUSA, M., AND JORGE, J. 2008, "Sketch-based modeling: A survey", Computers and Graphics, where the user draws sketches of a shape from different viewpoints to quickly create a 3D model. The optimization approach described above corrects automatically imprecision in the drawings by warping the shape outlines toward a consistent configuration. Such a system offers a simple and intuitive user experience and can be combined with recent methods on shape design based on orthographic views outlined in THORMAHLEN, T., AND SEIDEL, H.-P. 2008, "3D-modeling by ortho-image generation from image sequences", ACM SIGGRAPH Trans. Graph. 27, 3, 1-5.

It should be noted that, in the description, the computer program code has been associated with specific functional modules and the sequence of the steps has been presented in a specific order, one skilled in the art will understand, however, that the computer program code may be structured differently and that the order of at least some of the steps could be altered, without deviating from the scope of the invention.

## Claims

1. A computer-implemented method of generating a 3D body which is configured to cast in different directions shadows representing different images, the method comprising:
providing (ST1) in the computer (1) at least two binary images (I₁, I₂, I₃);
determining (ST2) in the computer (1) for each of the binary images (I₁, I₂, I₃) a shadow projection (P₁, P₂, P₃) directed from a different source (L₁, L₂, L₃) in a different one of the directions;
determining (ST3) by the computer (1) a 3D shadow hull (H) by intersecting the shadow projections (P₁, P₂, P₃) associated with each of the binary images (I₁, I₂, I₃); and
generating (ST6) by the computer (1) geometric data defining the 3D body based on the 3D shadow hull (H).

2. The method of claim 1, wherein determining (ST2) the shadow projections (P₁, P₂, P₃) includes defining in the computer (1) one of an orthographic projection and a perspective projection; and determining the 3D shadow hull (H) includes intersecting shadow cylinders or shadow cones, respectively.

3. The method of one of claims 1 or 2, wherein the method includes providing in the computer (1) more than two binary images (I₁, I₂, I₃); and applying by the computer (1) smooth transformations to the binary images (I₁, I₂, I₃) for reducing inconsistencies (Δ₁ₐ, Δ_{1b}, Δ₂ₐ, Δ_{2b}, Δ_{2c}, Δ₃ₐ, Δ_{3b}) between the binary images (I₁, I₂, I₃) and their respective shadows (I₁' , I₂', I₃') cast by the 3D body in each case for the source (L₁, L₂, L₃) and direction associated with the respective binary image (I₁, I₂, I₃).

4. The method of claim 3, wherein reducing inconsistencies includes determining by the computer (1) for a missing pixel (X) in an inconsistent shadow (Im₁') of one of the binary images (IM₁) a set of additional voxels (VS) for the 3D shadow hull (H) that would each cause a shadow pixel to be projected at the location of the missing pixel (X); and selecting by the computer (1) from the set of additional voxels (VS) one that causes least inconsistencies in the shadows (IM₂', IM₃') of the other ones of the binary images (IM₂, IM₃).

5. The method of one of claims 1-4, wherein the method comprises displaying by the computer (1) visual indications of inconsistencies (Δ₁ₐ, Δ_{1b}, Δ₂ₐ, Δ_{2b}, Δ_{2c}, Δ₃ₐ, Δ_{3b}) in the shadows (I₁', I₂', I₃') cast by the 3D body in each case for the source (L₁, L₂, L₃) and direction associated with one of the binary images (I₁, I₂, I₃); responsive to user instructions, applying affine transformations to at least one of the binary images (I₁, I₂, I₃); and showing to the user the effect of the affine transformations by determining an altered 3D shadow hull based on shadow projections (P₁, P₂, P₃) of the binary images (I₁, I₂, I₃) after their affine transformation, and displaying the visual indications of inconsistencies in the shadows (I₁', I₂', I₃') cast by an altered 3D body based on the altered 3D shadow hull.

6. The method of one of claims 1-5, wherein the method comprises displaying by the computer (1) a graphical representation of the 3D body; responsive to a user selection of one or more voxels in the graphical representation of the 3D body, keeping the respective voxels in the 3D body for cases where a removal of the respective voxels from the 3D body would cause a removal of a corresponding shadow pixel in one of the shadows (I₁', I₂', I₃') of the binary images (I₁, I₂, I₃), and removing the respective voxels in the 3D body otherwise.

7. The method of one of claims 1-6, wherein the method comprises manufacturing the 3D body based on the geometric data by one of laser etching a transparent cube, generating a mold for injection molding, shaping a block of material, and assembling material components.

8. A computing device (1) for defining a 3D body which is configured to cast in different directions shadows (I₁', I₂', I₃') of different images, the computing device (1) comprising:
an image data store (10) configured to store at least two binary images (I₁, I₂, I₃);
a shadow projection module (18) configured to determine for each of the binary images (I₁, I₂, I₃) a shadow projection (P₁, P₂, P₃) directed from a different source (L₁, L₂, L₃) in a different one of the directions;
a hull determination module (11) configured to determine a 3D shadow hull (H) by intersecting the shadow projections (P₁, P₂, P₃) associated with each of the binary images (I_{1,} I₂, I₃); and
a body definition module (17) configured to generate geometric data defining the 3D body based on the 3D shadow hull (H).

9. The computing device (1) of claim 8, wherein the shadow projection module (18) is configured to determine the shadow projections (P₁, P₂, P₃) by defining one of an orthographic projection and a perspective projection; and the hull determination module (11) is configured to determine the 3D shadow hull (H) by intersecting shadow cylinders or shadow cones, respectively.

10. The computing device (1) of one of claims 8 or 9, wherein the image data store (10) is configured to store more than two binary images (I₁, I₂, I₃); and the computing device (1) further comprises an optimization module (15) configured to apply smooth transformations to the binary images (I₁, I₂, I₃) for reducing inconsistencies (Δ₁ₐ Δ_{1b}, Δ₂ₐ, Δ_{2b}, Δ_{2c}, Δ₃a, Δ_{3b}) between the binary images (I₁, I₂, I₃) and their respective shadows (I₁', I₂', I₃') cast by the 3D body in each case for the source (L₁, L₂, L₃) and direction associated with the respective binary image.

11. The computing device (1) of claim 10, wherein the optimization module (15) is configured to apply the smooth transformations by determining for a missing pixel (X) in an inconsistent shadow (IM₁') of one of the binary images (IM₁) a set of additional voxels (VS) for the shadow hull (H) that would each cause a shadow pixel to be projected at the location of the missing pixel (X), and by selecting from the set of additional voxels (VS) one that causes least inconsistencies in the shadows (IM₂', IM₃') of the other ones of the binary images (IM₂, IM₃).

12. The computing device (1) of one of claims 8-11, wherein the computing device (1) further comprises an image editor (14) configured to display visual indications of inconsistencies (Δ₁ₐ, Δ_{1b,} Δ₂ₐ, Δ_{2b}, Δ_{2c}, Δ₃ₐ, Δ_{3b}) in the shadows (I₁', I₂', I₃') cast by the 3D body in each case for the source (L₁, L₂, L₃) and direction associated with one of the respective binary images (I₁, I₂, I₃), to apply affine transformations according to user instructions to at least one of the binary images (I₁, I₂, I₃), and to show to the user the effect of the affine transformations by determining an altered 3D shadow hull based on shadow projections (P₁ P₂, P₃) of the binary images (I₁, I₂, I₃) after their affine transformation, and displaying the visual indication of inconsistencies in the shadows (I₁' I₂', I₃') cast by an altered 3D body based on the altered 3D shadow hull.

13. The computing device (1) of one of claims 8-12, wherein the computing device (1) further comprises a body editor (12) configured to display a graphical representation of the 3D body, to receive from a user instructions for selecting one or more voxels in the graphical representation of the 3D body, to keep the respective voxels in the 3D body for cases where a removal of the respective voxels from the 3D body would cause a removal of a corresponding shadow pixel in one of the shadows (I₁', I₂', I₃') of the binary images (I₁, I₂, I₃), and to remove the respective voxels in the 3D body otherwise.

14. A computer program product comprising a tangible computer-readable medium having stored thereon computer program code, the computer program code being configured to control a computing device (1) such that the computing device (1) generates a 3D body, which is configured to cast in different directions shadows (I₁', I₂', I₃') of different images, by
storing at least two binary images (I₁, I₂, I₃);
determining for each of the binary images (I₁, I₂, I₃) a shadow projection directed from a different source (L₁, L₂, L₃) in a different direction;
determining a 3D shadow hull (H) by intersecting the shadow projections (P₁, P₂, P₃) associated with each of the binary images (I₁, I₂, I₃); and
generating geometric data which defines the 3D body based on the 3D shadow hull (H).

15. The computer program product of claim 14, comprising further computer program code configured to control the computing device (1) such that the computing device (1) performs the method of one of the claims 1-7.
